# EUROPEAN PATENT APPLICATION

(11) **EP 2 157 538 A1**
(43) Date of publication of application: **24.02.2010**
(21) Application number: 09167967.0
(22) Date of filing: 17.08.2009
(51) Int. Cl.: G06Q 10/00

(54) **Methods, systems and computer readable media for generating an enhanced accuracy resistance summary for a plant variety utilizing a product management database**

(30) Priority: 21.08.2008 EP 08105087
(71) Applicant: Syngenta Participations AG, 4058 Basel (CH)
(72) Inventor: Cochrane, Daniel, Nampa, ID 83651 (US); Meijerink, Gerardus, 1611 KK Bovenkarspel (NL); Subramanian Haldorai, Vinoth, Coimbatore 641007 Tamil Nadu (IN); Raven, Maurice, 1601 BK Enkhuizen (NL)
(74) Representative: Badur, Ralf

(57) **Abstract**

Methods, systems, and computer readable media for generating an enhanced resistance summary for a plant variety utilizing a product management database are disclosed. According to one aspect, the method includes receiving a plant pathogen identification (PPI) code and an associated resistance data parameter for a plant variety. The PPI code is grouped with at least one other PPI code associated with the plant variety in accordance to similar resistance data parameters. The method also includes generating a resistance summary long value for each resistance data parameter group. A resistance summary short value corresponding to each resistance summary long value is generated. Each resistance summary short value is then populated into a resistance profile to create the enhanced accuracy resistance summary for the plant variety.

## Description

### TECHNICAL FIELD

The subject matter described herein relates to managing resistance information utilized by a product management database. More particularly, the subject matter described herein relates to methods, systems, and computer readable media for generating an enhanced accuracy resistance summary for a plant variety utilizing a product management database.

### BACKGROUND

A product management database (PMD) is a software application made available to certain breeders for providing and obtaining various types of information related to numerous varieties, or sub-species, of a plant. Examples of the type of information utilized by the PMD includes vegetable seed product line data, which may include related pathogen resistance data. Notably, the PMD may be configured to capture all breeding, production, registration, and marketing characteristics of numerous varieties of different plant species.

In one scenario, the PMD may be utilized by a breeder to designate the resistance level a given plant species variety exhibits when exposed to certain pathogens and/or environmental conditions. For example, a breeder may enter data for a given plant species variety that includes a plant pathogen identification (PPI) code and an associated resistance level using the PMD's breeder module, which functions as a user interface. Care must be taken by the breeder to make sure the correct PPI code is entered in order to ensure that the correct plant pathogen is indicated. PPI codes are essentially the abbreviations of pathogen identifiers that have been standardized and approved by international organizations, such as the European Seed Association (ESA), the International Seed Health Initiative (ISHI), and the like.

Specifically, the breeder manually enters the values of all of the PPI names. Based on the levels of resistances, the breeder groups the PPI names into three categories. Namely, the three categories include a high resistance (HR) category, intermediate resistance (IR) category, and tolerant category. After manually grouping and entering the PPI names and values, the breeder manually enters the abbreviated PPI codes in accordance with international rules. The breeder subsequently manually copies the entered PPI codes and values into a separate marketing module section of the PMD. It is important to note that the codes and values in both the breeding module and marketing module can be altered at any time. Due to the complexity of the international rules, the number of people involved with operating and maintaining the PMD, and the number of manual operations and calculations, errors can be easily made.

For example, the likelihood that the resistance value of a variety of various pathogens may be overclaimed or underclaimed during the manual translation (e.g., due to typographical mistakes) is extremely high. Since the resistance summary profile of a plant species variety seed is arguably the primary factor related to its commercial success, any error with respect to an assessment of either the existence or effectiveness of a given resistance may expose a commercial seed selling entity (or any entity that utilizes the PMD for information) to lawsuits, complaints, and other legal consequences. Thus, it is critical that any resistance summary that is ultimately utilized to market a plant species seed be error free.

Thus, a more efficient and reliable method for generating a resistance summary of enhanced accuracy for a plant variety utilizing a product management database is needed.

### SUMMARY

Methods, systems, and computer readable media for generating an enhanced accuracy resistance summary for a plant variety utilizing a product management database are disclosed. According to one aspect, the method includes receiving a plant pathogen identifier (PPI) and an associated resistance data parameter for a plant variety. The PPI code is grouped with at least one other PPI code associated with the plant variety in accordance to similar resistance data parameters. The method also includes generating a resistance summary long value for each resistance data parameter group. A resistance summary short value corresponding to each resistance summary long value is generated. Each resistance summary short value is then populated into a resistance profile to create the enhanced accuracy resistance summary for the plant variety.

The subject matter described herein for generating a resistance summary for a plant variety utilizing a product management database may be implemented using a computer readable medium having stored thereon computer executable instructions that when executed by the processor of a computer perform steps of the aforementioned method (see above). Exemplary computer readable media suitable for implementing the subject matter described herein includes disk memory devices, programmable logic devices, and application specific integrated circuits. In one implementation, the computer readable medium may include a memory accessible by a processor. The memory may include instructions executable by the processor for implementing any of the methods for generating an enhanced accuracy resistance summary for a plant variety utilizing a product management database described herein. In addition, a computer readable medium that implements the subject matter described herein may be distributed across multiple physical devices and/or computing platforms.

### BRIEF DESCRIPTION OF THE DRAWINGS

The subject matter described herein will now be explained with reference to the accompanying drawings of which:
Figure 1 is a block diagram depicting an exemplary system for generating an enhanced accuracy resistance summary for a plant variety utilizing a product management database according to an embodiment of the subject matter described herein;
Figure 2 is a diagram depicting a home screen of a product management database according to an embodiment of the subject matter described herein;
Figure 3 is a diagram depicting a breeding module screen of a product management database according to an embodiment of the subject matter described herein;
Figure 4 is a diagram depicting a resistance summary table of a product management database according to an embodiment of the subject matter described herein;
Figure 5 is a diagram depicting a marketing module screen of a product management database according to an embodiment of the subject matter described herein;
Figure 6 is a diagram depicting a modified resistance summary of a marketing module screen according to an embodiment of the subject matter described herein; and
Figure 7 is a flow chart depicting an exemplary process for generating an enhanced accuracy resistance summary for a plant variety using a product management database according to an embodiment of the subject matter described herein.

### DESCRIPTION

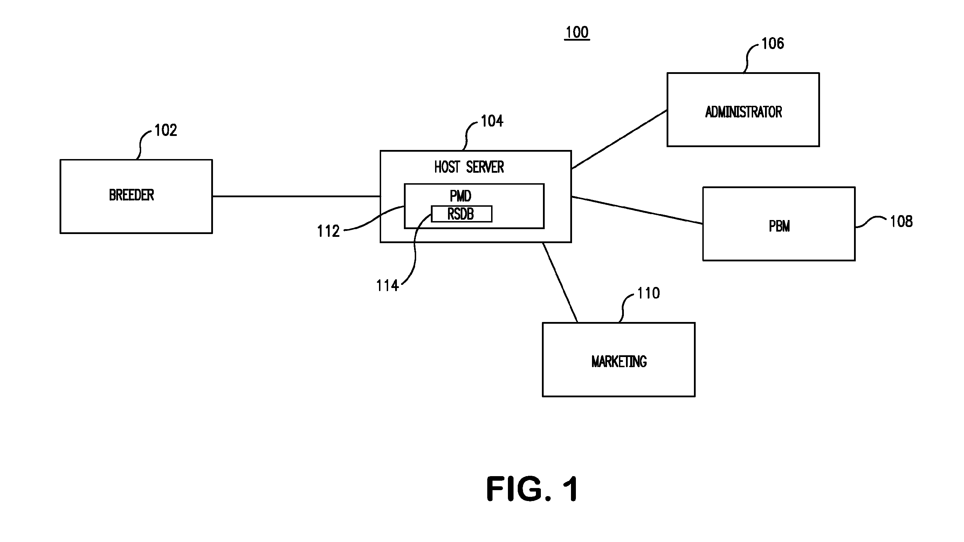

Figure 1 depicts an exemplary system **100** that utilizes a product management database (PMD) to generate a resistance summary for a plant species variety. Notably, Figure 1 includes a breeder entity **102**, a host server **104** (i.e., a computer processor), a database administrator entity **106**, a product business manager entity **108**, and a marketing entity **110**. Although described as entities, components **102, 106, 108**, and **110** may be understood to be embodied as a computing device operated by a particular user. For example, breeder entity **102** may comprise a breeder utilizing a personal computer or like device to utilize system **100.**

In one embodiment, breeder entity **102** contacts host server **104** (e.g., via the Internet or other communications network) into to gain access to PMD application **112**. Host server **104** may comprise a computer, server, network element, or the like, which is includes a computer processor configured to manage and maintain PMD application **112**. PMD application **112**, as mentioned above, comprises a database application that provides users the ability to submit or modify information pertaining to plant species varieties, such as a plant variety's resistance to a given pathogen or environmental condition. In addition to breeder entity **102**, host server **104** may communicate with administrator entity **106**, PBM entity **108,** and marketing entity **110**. In one embodiment, PMD application **112** may be configured to provide different types of access (e.g., read-only, editing restrictions, etc.) to each of the entities **102, 106, 108**, and **110**).

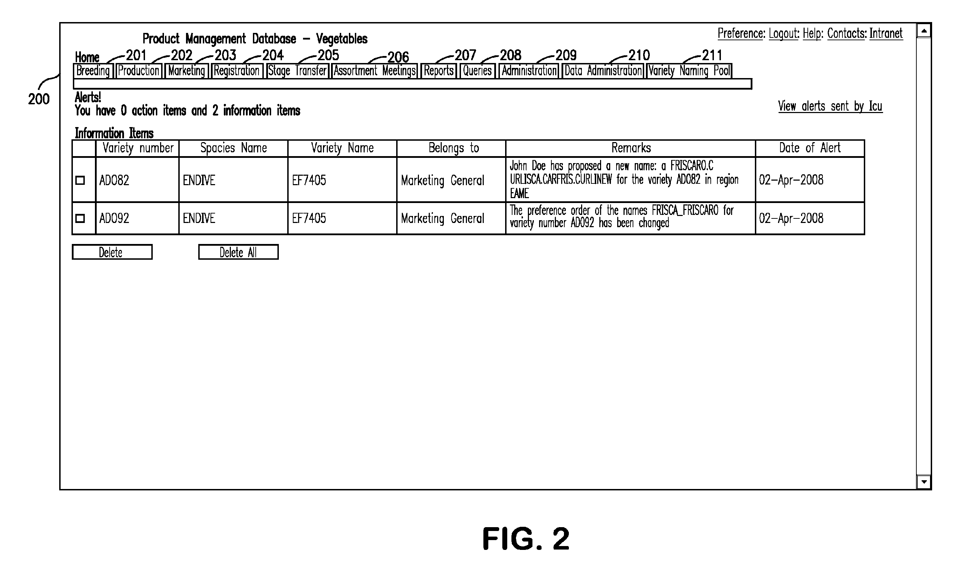

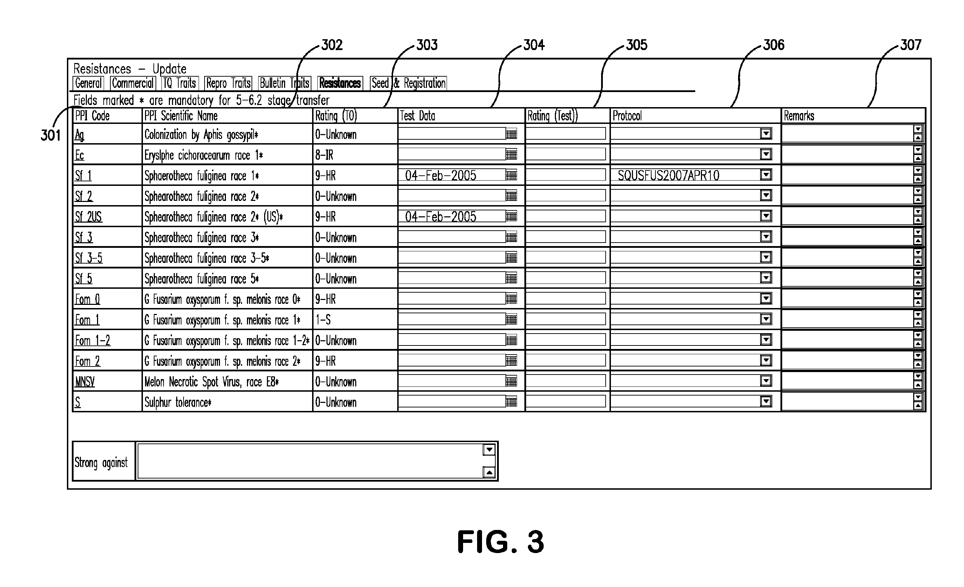

Once access to PMD application **112** is obtained, breeder entity **102** may be presented with a "home screen" which enables breeder entity **102** to access a plurality of modules associated with PMD application **112**. Figure 2 depicts an exemplary home screen **200** that may be displayed by PMD application **112** and serve as a graphical user interface for breeder entity **102.** In one embodiment, home screen **200** contains module tabs **201-211**, which may be configured to provide access to specific module screens supported by PMD application **112** when accessed by breeder entity **102**. For example, breeding tab **201** may provide immediate access to a "breeding module" when clicked by the breeder. Figure 3 shows an exemplary breeding module screen **300** which may be displayed after a breeder interfaces with breeding tab **201**. In one embodiment, breeding module screen **300** (which may include any one of several tabbed sub-modules) may be embodied as a "breeding input resistance sub-module" screen. Namely, screen 300 may include a plurality of columns containing information, such as the PPI code column **301**, the PPI code scientific name column **302**, a rating (TQ) column **303**, and a test date column **304**. Although only four columns are depicted in Figure 3, additional columns may be incorporated in screen **300** without departing from the scope of the present subject matter.

As mentioned above, a breeder (or plant pathologist) may use PMD application **112** (e.g., via breeding module screen **300**) to assign resistance data parameters to a given plant variety. These resistance data parameters can be embodied as numerical values/ratings or alphanumeric representations that may be based on the plant variety's demonstrated resistance to specific pathogens (i.e., PPI codes). In one embodiment, breeder entity **102** may access a plant species variety profile using a breeding module screen **300** and, in column **301**, enter a plant pathogen identifier (PPI) code of a pathogen to which the given plant variety is resistant. Similarly, breeder entity **102** may enter the scientific name of the pathogen in column **302** and enter a resistance rating/level in column **303** that corresponds to the PPI. In one embodiment, the resistance levels may comprise classifications such as high resistance (HR) level, intermediate resistance (IR) level, and Tolerant in addition to corresponding numerical values. Lastly, breeder entity **102** may also enter, in column **304,** the date on which the resistance was tested and confirmed.

Once the PPI(s) is entered, PMD application **112** determines which PPI codes listed in screen **300** may be grouped in accordance to being characterized as having a high resistance, an intermediate resistance, or a Tolerant resistance. In one embodiment, PMD application **112** organizes the appropriate PPI codes in the three groups. For each of the HR group, IR group, and Tolerant group, a "resistance summary long value" is ascertained. In order to derive a resistance summary long value, PMD application **112** may organize the PPI codes in each group in accordance to common resistance definitions, or PPI code scientific names.

For example, as shown in Figure 3, the common resistance definition for "Sf 1" and "Sf 2US" is "sphaerotheca fuliginea" and the common resistance definition for "Fom 0" and "Fom 2" is "Fusarium oxysporum f. sp. melonis". In this scenario, "Sf 1" and "Sf 2US" belong to a first HR sub-group, and "Fom 0" and "Fom 2" belong to a second HR sub-group (as per the respective common resistance definitions). Once the sub-groups in the HR group are formed, PMD application **112** may derive the resistance summary long value for the HR group by combining the two sub-groups. Therefore, the resulting resistance summary long value may be registered as "Sf 1, Sf 2US / Fom 0, Fom 2". Although derived and used instead of the lengthy Latin-based scientific names for the sake of convenience, the resistance summary long value is still considered too lengthy to use for marketing and commercial purposes. Consequently, PMD application **112** is configured to derive a resistance summary short value that adequately represents a large resistance summary long value.

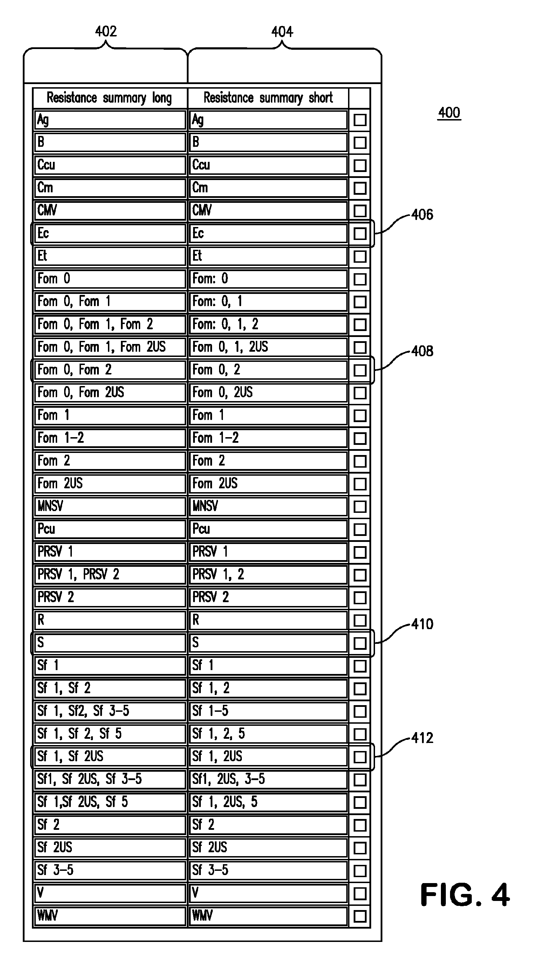

In one embodiment, the resistance summary long value for the HR PPI code group is compared with a resistance summary database **114** in order to produce a resistance summary short value. In one embodiment, resistance summary database **114** is contained in PMD application **112** and may contain entries use to compare with a given resistance summary long value. For example, the resistance summary long value of "Sf 1, Sf 2US / Fom 0, Fom 2" may be cross-referenced with entries of resistance summary table or database **400**, which is depicted in Figure 4. In one embodiment, resistance summary database **400** may represent one embodiment of database **114** as depicted in Figure 1.

Returning to Figure 4, resistance summary database **400** is illustrated as a matrix of resistance summary long values mapped to corresponding resistance summary short values for a melon species. Specifically, database **400** comprises two columns, i.e., a resistance summary long value column **402** and a resistance summary short value column **404**. Notably, column **402** may be perceived as a list of possible values that are permitted to be included in a resistance summary long value to be compared. That is, an entry in column **402** may contain the resistance summary long value in its entirety or may instead contain only a portion of the long value. For example, consider circled sections **408** and **412** in Figure 4. Specifically, section **412** includes the resistance summary long value portion of "Sf 1, Sf 2US" which is shown to correspond to the resistance summary short value "Sf: 1, 2US". Similarly, the resistance summary long value portion of "Fom 0, Fom 2" corresponds to the resistance summary short value "Fom: 0, 2", as indicated by circled section **408**. After determining these two resistance summary short value portions, PMD application **112** may produce a final and complete HR resistance summary short value by combining the two short value portions. For example, the complete HR resistance summary short value may be represented as "Sf: 1, 2US / Fom: 0, 2". In a manner similar to determining the resistance summary short value for the HR group, PMD application **112** may also be configured to determine a final and resistance summary short value for each of the IR and Tolerant groups. For example, the complete resistance summary short value for the IR group is "Ec" as shown by circled portion **406** and the complete resistance summary short value for the Tolerant group is "S" as shown by circled portion **410**.

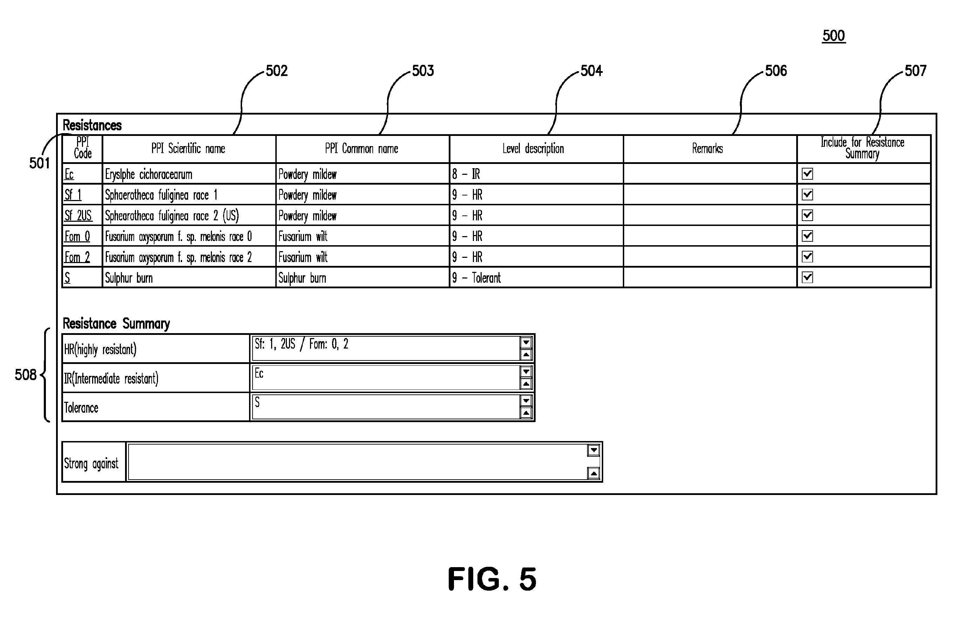

Once the complete resistance summary short value for each of the HR, IR, and Tolerant groups are determined, the short values are automatically displayed in marketing module screen **500** as shown in Figure 5. Specifically, Figure 5 illustrates a marketing module screen **500** comprising a resistances section that includes columns **501-507** (which collectively make up the resistance profile) and a resistance summary **508.** In one embodiment, marketing module screen **500** displays the individual PPI codes that make up the resistance summary short values in column **501** (in a manner not unlike column **301** in Figure 3), along with the respective scientific names in column **502**, the PPI code common names in column **503**, and the level description in column **504.** Marketing module screen **500** also includes a remarks column **506** and a column **507** for selecting/deselecting the PPI codes that are to be displayed in resistance summary **508**. Resistance summary **508** may be considered an "enhanced accuracy resistance summary" due to the fact that human errors are reduced by the present subject matter. Although only six columns are depicted in Figure 5, additional columns may be incorporated in marketing module screen **500** without departing from the scope of the present subject matter.

In one embodiment, the modules screens, or sections thereof, may be restricted to a particular type of user. For example, PBM entity **108** may be provided sole access to manipulate resistance summary **508**. As mentioned above, the resistance types (as indicated in resistance summary **508**) of a particular plant variety is typically the primary selling point of a plant variety seed product. Notably, resistance summary **508** is ultimately utilized by marketing personnel (e.g., marketing entity **110**) to include on leaflets and other commercial communications. Consequently, PBM entity **108** may choose to modify or customize resistance summary **508** depending on the prospective buyer. For example, if a plant variety has a particular resistance to a given pathogen that does not exist or is not commonly found in a given geographic region, PBM entity **108** may strategically choose to delete the PPI codes from leaflets directed to buyers located in that geographic area (since the resistance is likely to be inapplicable or irrelevant to growers in that area).

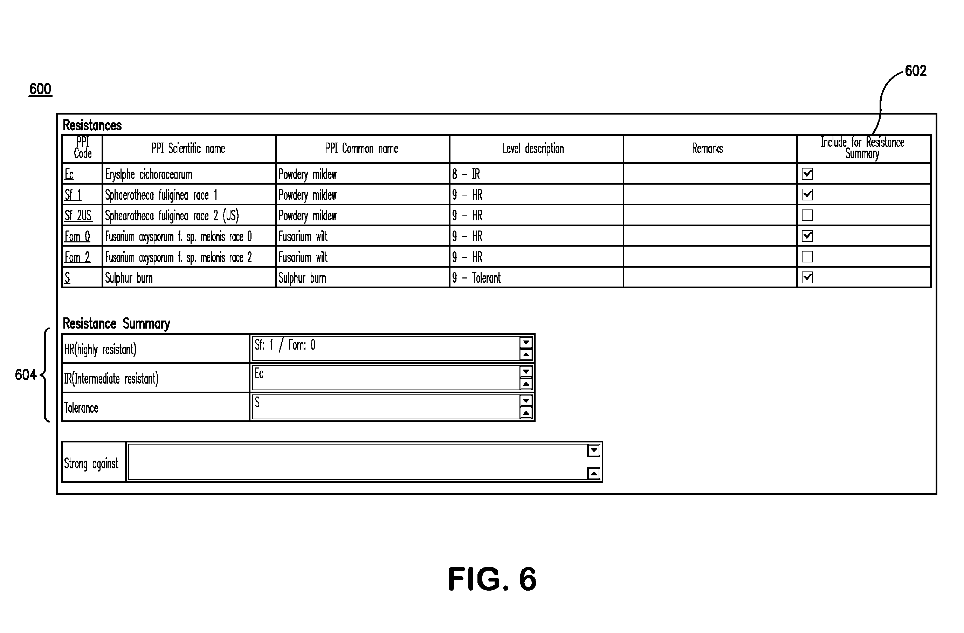

In one embodiment, resistance summary **508** may be modified (e.g., by PBM entity **108**) by manipulating the checkboxes present in column **507.** Each checkbox in column **507** is associated with a PPI code listed in column **501**. By selecting/deselecting a checkbox, PBM entity **108** is afforded the ability to choose which PPI codes appear in resistance summary **508**. For example, column **507** in Figure 5 is shown to include checkmarks in all of the boxes that correspond to all of the PPI codes in column **501**. However, in Figure 6, column **602** (which represents a modified column **507**) depicts that two checkboxes have been unchecked. Namely, the checkboxes associated with "Sf 2US" and "Fom 2" have been presumably deselected by PBM entity **108**. If PBM entity **108** (or any other authorized user) deselects the abovementioned checkboxes and hits the "save button," then resistance summary **604** is configured to immediately reflect the changes. Specifically, the "Sf 2US" and "Fom 2" PPI codes will not be included in the updated resistance summary **604** (as compared to unmodified resistance summary **508** in Figure 5).

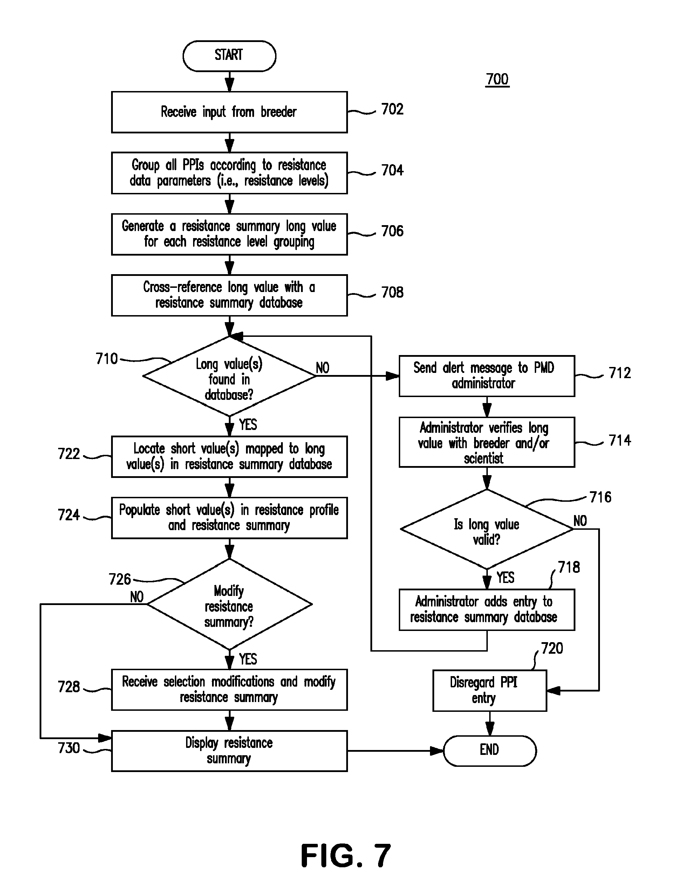

In order to better illustrate the present subject matter, Figure 7 is provided to demonstrate exemplary steps that may be performed by PMD application **112**. Namely, Figure 7 depicts a method **700** for generating a resistance summary for a plant variety using a product management database. In block **702**, resistance input is received. In one embodiment, a breeder (or plant pathologist) may be given access to assign or modify resistance ratings related to a particular variety of a plant species (e.g., a specific variety of melon). For example, breeder entity **102** may access home page **200** of PMD application **112** and use an Internet browser to navigate to breeding module screen **300.** Notably, breeder entity **102** may access a "resistances" section (as indicated in Figure 3) of the breeding module screen **300** in order to enter a PPI code and associated resistance rating, or modify a resistance rating associated with an existing PPI code, for the particular plant species variety.

In block **704**, PPI codes of the plant variety are grouped according to resistance data parameters. In one embodiment, once the PPI code and corresponding resistance data parameter (e.g., resistance level) are entered, PMD application **112** may be configured to organize all the PPI codes (e.g., the recently entered PPI code and all previously existing PPI codes) associated with the plant variety into groupings of resistance levels. For example, the PPI codes may be organized into an HR group, an IR group, and a Tolerant group.

In block **706**, a resistance summary long value for each resistance data parameter group is generated. In one embodiment, PMD application **112** generates a "resistance summary long value" for each of the HR group, IR group, and Tolerant group. The resistance summary long value may comprise a concatenation combination of all the PPI codes in a specific group in accordance with a specific syntax. For example, if a melon plant variety (e.g., the melon plant variety introduced in Figure 3) is highly resistant to pathogens identified by PPI codes "Sf 1", "Sf 2US", "Fom 0", and "Fom 2", then the resulting resistance summary long value for the HR group of the melon plant variety may comprise "Sf 1, Sf 2US / Fom 0, Fom 2". Furthermore, PMD application **112** generates a second and third resistance summary long value for the IR group and Tolerant group, respectively.

In block **708**, each resistance summary long value is cross-referenced with entries of a resistance summary database. In one embodiment, each resistance summary long value generated in block **706** is separately cross-referenced with the entries of resistance summary database **400**. For example, PMD application **112** may compare the derived resistance summary long value "Sf 1, Sf 2US / Fom 0, Fom 2" with the various long value entries present in column **402** of resistance summary database **400**.

In block **710**, a determination is made as to whether the entire resistance summary long value (e.g., either as a whole or in separate portions) is found in the resistance summary database. If the resistance summary long value is found in resistance summary database **400**, then method **300** continues to block **722**. Otherwise, method **300** proceeds to block **712**.

In block **712**, an alert message is sent. In one embodiment, an alert message is sent to a PMD administrator in response to the failure of locating the entire resistance summary long value (as a whole or in separate portions) in database **400**. For example, an email alert message may be sent to designated PMD administrator entity **106**.

In block **714**, the resistance summary long value is verified. In one embodiment, PMD administrator entity **106** responds to the alert message by taking measures to verify the resistance summary long value. For example, PMD administrator entity **106** may contact the original breeder (who inputted the resistance) to ensure that the resistance summary long value was entered correctly. Alternatively, PMD administrator entity **106** may also confirm the resistance summary long value with a pathologist, scientist, or the like.

In block **716**, a determination is made as to whether the resistance summary long value is valid. If the resistance summary long value is verified and deemed valid by PMD administrator entity **106**, then method **700** continues to block **718**. Otherwise, method **700** proceeds to block **720** where the input (e.g., the original PPI code entry or resistance level modification) of breeder entity **102** is disregarded.

In block **718**, the entry is added to the resistance summary database. In one embodiment, PMD administrator entity **106** adds the verified PPI code entry to resistance summary database **400** in response to the breeder (and/or pathologist) validating the resistance summary long value. Method **700** then loops back to block **710** where the determination of whether the resistance summary long value is found in resistance summary database **400** is conducted once again.

In block **722**, the resistance summary short value mapped to the resistance summary long value is located. In one embodiment, if the entire resistance summary long value (as a whole or all of its portions) is present in column **402,** then PMD application **112** obtains the corresponding resistance summary short value(s) present in column **404** in order to generate a complete resistance summary short value. In this scenario, PMD application **112** recognizes that the "Sf 1, Sf 2US" portion is present as an entry (see section **412**) in column **402** and obtains the short value portion "Sf: 1, 2US" as a part of the resistance summary short value to be generated. Similarly, PMD application **112** recognizes that the "Fom 0, Fom 2" portion (see section **408**) is present as another entry in column **402** and obtains the corresponding short value portion "Fom: 0, 2". Thus, the final and complete resistance summary short value for the HR group may be constructed as "Sf: 1, 2US / Fom: 0, 2" (i.e., using the two short value portions). In one embodiment, this process of obtaining a resistance summary short value is performed for each of the remaining resistance summary long values associated with the IR and Tolerant groups.

In block **724,** the computed resistance summary short values are populated in a resistance profile and resistance summary of the marketing module. In one embodiment, the resistance summary short values obtained in block **722** are populated in the appropriate fields of marketing module screen **500**. For example, the PPI codes which compose each of the different resistance summary short values are each individually listed in column **501** (in a manner like column **301** in Figure 3). Likewise, the resistance summary short values for each PPI code group may be listed in resistance summary **508** depending on whether the PPI code is designated in column **507**. For instance, as shown in Figure 5, each of the PPI codes listed in column **501** are selected for display in resistance summary **508** by the corresponding checkmarks present in column **507**.

In block **726**, a determination is made as to whether the resistance summary is to be modified. As mentioned above, PBM entity **108** may strategically decide to customize resistance summary **508** with regard to a particular geographic area in which marketing leaflets are to be distributed. If resistance summary **508** requires modification by PBM entity **108,** then method **700** proceeds to block **728**. Otherwise, method **700** continues to block **730**.

In block **728**, selection modifications are received and the resistance summary is modified. In one embodiment, PBM **108** may select or deselect the checkmarks in column **507** in order to include or exclude certain PPI codes from appearing in the display of resistance summary **508**. For instance, Figure 6 illustrates a column **602** (which represents the modification of column **508** in Figure 5) that illustrates the scenario where PBM entity **108** has deselected the checkboxes associated with PPI codes "SF 2US" and "Fom 2". Notably, these two PPI codes are not displayed or included in resistance summary **604** (which represents a modified resistance summary **508** from Figure 5). In one embodiment, the change to resistance summary **604** (e.g., the displaying of resistance summary **604** on a computer screen) does not occur until after PBM entity **108** modifies column **602** and hits an "update" button.

In block **730**, the resistance summary may be used for various indicia, such as marketing literature. In one embodiment, marketing personnel (i.e., marketing entity **110**) may access marketing module screen **500** in order to obtain information contained in the most recent resistance summary. The most recent resistance summary may either be represented by (or displayed as) resistance summary **508** or resistance summary **604**, depending on whether changes were made to the resistance summary. Marketing personnel may then use the information displayed in the resistance summary to include in various indicia, such as marketing brochures, literature, and leaflets used to market seeds of a particular plant variety (e.g., in this example, a melon variety). In one embodiment, marketing personnel may not have access to modify the marketing module (e.g., the resistance summary), but rather may only be entitled to read and copy access to the marketing module and resistance summary.

In one embodiment, a computer readable media that when executed by a computer processor generates an enhanced accuracy resistance summary for a plant variety utilizing a product management database, including the following steps: receiving a plant pathogen identification (PPI) code and an associated resistance data parameter for a plant variety, grouping the PPI code with at least one other PPI code associated with the plant variety in accordance to similar resistance data parameters, generating a resistance summary long value for each resistance data parameter group, computing a resistance summary short value corresponding to each resistance summary long value, and populating each resistance summary short value into a resistance profile to create the enhanced accuracy resistance summary for the plant variety. In another related embodiment, the resistance data parameter includes a resistance level. In yet another embodiment, the resistance level comprises a numerical rating value. In yet another embodiment, the resistance level includes at least one of a high resistance (HR) level, an intermediate resistance (IR) level, and a Tolerant resistance level. In yet another embodiment, each resistance data parameter group includes a high resistance level group, an intermediate resistance level group, or a Tolerant resistance level group. In yet another embodiment, the computing step performed comprises cross-referencing the resistance summary long value to a resistance summary database that includes a plurality of resistance summary short value entries respectively mapped to a plurality of resistance summary long value entries, matching the resistance summary long value to an identical resistance summary long value entry, and designating the resistance summary short value entry that corresponds to the matched resistance summary long value entry as the resistance summary short value. In yet another embodiment, the computer readable media executed by the processor may include configuring the resistance profile to display a subset of resistance summary short values in the enhanced accuracy resistance summary. In yet another embodiment, a project business manager (PBM) is provided access to configure the resistance profile. In yet another embodiment, the resistance profile includes a plurality of PPI codes that collectively compose the resistance summary short values. In yet another embodiment, the configuring of the resistance profile comprises selecting a subset of the PPI codes included in the resistance profile to display in the enhanced accuracy resistance summary. In yet another embodiment, the computer readable media executed by the processor may include generating marketing literature associated with the plant variety using information contained in the enhanced accuracy resistance summary. In yet another embodiment, the resistance summary database includes a database comprising a resistance summary long value column containing the resistance long value entries that correspond to the short value entries contained in a resistance summary short value column.

It will be understood that various details of the subject matter described herein may be changed without departing from the scope of the subject matter described herein. Furthermore, the foregoing description is for the purpose of illustration only, and not for the purpose of limitation.

## Claims

1. A method for generating an enhanced accuracy resistance summary for a plant variety, the method comprising:
receiving a plant pathogen identification (PPI) code and an associated resistance data parameter for a plant variety;
grouping the PPI code with at least one other PPI code associated with the plant variety in accordance to similar resistance data parameters;
assigning a resistance summary long value for each resistance data parameter group;
assigning a resistance summary short value corresponding to each resistance summary long value;
adding each resistance summary short value into a resistance profile to create the enhanced accuracy resistance summary for the plant variety; and
displaying the enhanced accuracy resistance summary corresponding to the plant variety.

2. The method of claim 1 wherein the resistance data parameter includes a resistance level.

3. The method of claim 2 wherein the resistance level comprises a numerical rating value.

4. The method of claim 2 wherein the resistance level includes at least one of a high resistance (HR) level, an intermediate resistance (IR) level, and a Tolerant resistance level.

5. The method of claim 1 wherein each resistance data parameter group includes a high resistance level group, an intermediate resistance level group, or a Tolerant resistance level group.

6. The method of claim 1 wherein computing a resistance summary short value comprises:
cross-referencing the resistance summary long value to a resistance summary database that includes a plurality of resistance summary short value entries respectively mapped to a plurality of resistance summary long value entries;
matching the resistance summary long value to an identical resistance summary long value entry; and
designating the resistance summary short value entry that corresponds to the matched resistance summary long value entry as the resistance summary short value.

7. The method of claim 1 further comprising:
configuring the resistance profile to display a subset of resistance summary short values in the enhanced accuracy resistance summary.

8. The method of claim 7 wherein a project business manager (PBM) is provided access to configure the resistance profile.

9. The method of claim 7 wherein the resistance profile includes a plurality of PPI codes that collectively compose the resistance summary short values.

10. The method of claim 9 wherein configuring the resistance profile comprises selecting a subset of the PPI codes included in the resistance profile to display in the enhanced accuracy resistance summary.

11. The method of claim 1 wherein displaying the enhanced accuracy resistance summary includes displaying the enhanced accuracy resistance summary on indicia corresponding to the plant variety.

12. The method of claim 6 wherein the resistance summary database includes a database comprising a resistance summary long value column containing the resistance long value entries that correspond to the short value entries contained in a resistance summary short value column.

13. A computer readable medium having stored thereon computer-executable instructions that when executed by a processor generate an enhanced accuracy resistance summary for a plant variety utilizing a product management database, including the following steps:
receiving a plant pathogen identification (PPI) code and an associated resistance data parameter for a plant variety;
grouping the PPI code with at least one other PPI code associated with the plant variety in accordance to similar resistance data parameters;
generating a resistance summary long value for each resistance data parameter group;
computing a resistance summary short value corresponding to each resistance summary long value; and
populating each resistance summary short value into a resistance profile to create the enhanced accuracy resistance summary for the plant variety.

14. An apparatus for generating an enhanced accuracy resistance summary for a plant variety, the apparatus comprising:
a computer processor; and
a computer readable medium storing computer-executable instructions that when executed by the computer processor performs the following steps:
receiving a plant pathogen identification (PPI) code and an associated resistance data parameter for a plant variety;
grouping the PPI code with at least one other PPI code associated with the plant variety in accordance to similar resistance data parameters;
generating a resistance summary long value for each resistance data parameter group;
computing a resistance summary short value corresponding to each resistance summary long value; and
populating each resistance summary short value into a resistance profile to create the enhanced accuracy resistance summary for the plant variety.
